# EUROPÄISCHE PATENTANMELDUNG

(11) **EP 0 680 037 A1**
(43) Veröffentlichungstag der Anmeldung: **02.11.1995**
(21) Anmeldenummer: 95200985.0
(22) Anmeldetag: 19.04.1995
(51) Int. Cl.: G11B 5/53

(54) **Abtasteinrichtung für ein Magnetbandgerät**

(30) Priorität: 28.04.1994 DE 4414842
(71) Anmelder: Philips Patentverwaltung GmbH, 22335 Hamburg (DE); PHILIPS ELECTRONICS N.V., 5621 BA Eindhoven (NL)
(72) Erfinder: Maack, Werner, D-22335 Hamburg (DE)
(74) Vertreter: Erdmann, Anton, Dipl.-Ing.

(57) **Zusammenfassung**

Die Erfindung bezieht sich auf eine Abtasteinrichtung für ein Magnetbandgerät mit einem zwischen einer Ober- und Untertrommel (11, 12) eines Scanners (10) drehbar angeordneten Kopfrad (13) und mit Magnetköpfe (17) aufweisenden Kopfträgern (16), die am Umfang des Kopfrades (13) befestigt sind. Zur Vereinfachung der Montage und der Justierung der Kopfträger (16) wird gemäß der Erfindung vorgesehen, daß die Kopfträger (16) von außen in radialer Richtung (R) an das Kopfrad (13) anbaubar und justierbar ausgebildet sind.

## Beschreibung

Die Erfindung bezieht sich auf eine Abtasteinrichtung für ein Magnetbandgerät mit einem zwischen einer Ober- und Trommel eines Scanners drehbar angeordneten Kopfrad und mit Magnetköpfe aufweisenden Kopfträgern, die am Umfang des Kopfrades befestigt sind.

Eine derartige Abtasteinrichtung ist z.B. durch die DE 41 10 589 A1 bekannt geworden. Dabei weist das Kopfrad an seiner oberen und unteren Planfläche segmentförmige Aussparungen zur Aufnahme von mit Magnetköpfen versehenen Kopfträgern auf. Dabei ist die Anordnung so getroffen, daß auf der einen Seite des Kopfrades Aufsprech-Magnetköpfe und auf der anderen Seite Wiedergabe-Magnetköpfe vorgesehen sind. Die Befestigung dieser Kopfträger kann nur in demontiertem Zustand des Scanners erfolgen, da die entsprechenden Befestigungsschrauben parallel zur Achse des Scanners angeordnet sind. Gleiches gilt für Justierschrauben. Eine ähnliche Bauart zeigt ebenfalls die JP-OS 2-252 114 A.

Durch das DE-GM 92 16 030 ist eine Kopftrommel-Anordnung für Video- und/oder Audiogeräte bekannt geworden, die eine feststehende Kopftrommel und ein rotierendes Kopftrommelteil aufweist, welches einen oder mehrere, auf Kopfträgern befestigte Magnetköpfe trägt. Dabei weist das rotierende Kopftrommelteil eine topfähnliche Form mit einer axialen Öffnung auf, wobei die Kopfträger durch diese Öffnung auf die entsprechende Kopfträgerfläche aufgelegt und mittels Schrauben in dem Kopftrommelteil befestigt werden. Gleiches gilt für die Justierschrauben.

Der Erfindung liegt die Aufgabe zugrunde, eine Abtasteinrichtung der eingangs genannten Art derart zu gestalten, daß sowohl eine Montage als auch eine Justage der Magnetköpfe im nicht demontiertem Zustand des Scanners ermöglicht werden kann.

Diese Aufgabe wird gemäß der Erfindung dadurch gelöst, daß die Kopfträger von außen in radialer Richtung an das Kopfrad anbaubar und justierbar ausgebildet sind. Eine derartige Bauweise ermöglicht sowohl die Montage als auch die Justierung, ohne daß eine Demontage des Scanners erforderlich ist. Damit ergibt sich eine erhebliche Einsparung an Montage- und Justierzeit, wenn z.B. eine Auswechselung oder Nachjustierung der Magnetköpfe erforderlich ist. Während bei bisher bekannten Bauarten dazu der gesamte Scanner demontiert werden mußte, da die Befestigungs- und Justierschrauben nur in axialer Richtung zugänglich sind, ist nunmehr gemäß der Erfindung eine derartige Demontage nicht mehr erforderlich.

In Ausgestaltung der Erfindung ergibt sich eine einfache Montage der Kopfträger dadurch, daß das Kopfrad an seinem Außenumfang mit nach radial außen gerichteten Aussparungen zur Aufnahme der Kopfträger versehen ist und daß der Scanner im Bereich des Kopfrades an einer nicht vom Magnetband umschlungenen Stelle eine Montageöffnung zur Einführung der Kopfträger aufweist. Die Montage bzw. Demontage der Kopfträger erfolgt dann so, daß das Kopfrad so lange gedreht wird, bis jeweils eine Aussparung des Kopfrades hinter der Montageöffnung erscheint, so daß eine schnelle und problemlose Montage und Justierung der Kopfträger vorgenommen werden kann.

Die genannte Montageöffnung kann z.B. entweder in der Ober- oder in der Untertrommel oder teilweise in beiden Trommeln ausgebildet sein. Dies hängt von der Art der Anordnung des Kopfrades ab.

In der Regel trägt ein Kopfträger einen Magnetkopf. Es wäre jedoch auch eine vorteilhafte Bauart denkbar, wobei ein Kopfträger mehrere Magnetköpfe trägt, die dann auch z.B. gemeinsam justiert werden könnten.

Zur Befestigung der Kopfträger an dem Kopfrad weist jeder Kopfträger jeweils mindestens eine radiale Bohrung zur Aufnahme einer Befestigungsschraube auf, die in eine entsprechende Gewindebohrung des Kopfrades eingreift. Im Idealfall kann die Anordnung so getroffen sein, daß die entsprechenden Aussparungen im Kopfrad paßgenau den Abmessungen der Kopfträger angepaßt werden, so daß mit dem Einbau bereits eine Justierung erfolgt ist und damit keine Nachjustierung erforderlich ist. Dies erfordert jedoch einen sehr großen Aufwand, hat aber den Vorteil, daß die Kopfträger einfach in die entsprechende Aussparung eingeseetzt und durch die Befestigungsschraube befestigt werden können, ohne daß eine besondere Justierung nötig wäre.

In den meisten Fällen dürfte jedoch nach der Montage eine Justierung erforderlich sein, wozu in Ausgestaltung der Erfindung Mittel zur Seiten- und Höhenjustierung der Kopfträger vorgesehen sind. Dabei weist in Ausgestaltung der Erfindung jeder Kopfträger zwei radiale Bohrungen zur Aufnahme von Befestigungs- bzw. Seitenjustierschrauben auf, wobei ferner der Kopfträger an seiner stirnseitigen Befestigungsfläche mit einer senkrecht zwischen den Bohrungen verlaufenden stegartigen Erhöhung versehen ist. Diese stegartige Erhöhung verläuft rechtwinklig zu einer durch die Mittelpunkte der Befestigungsbohrungen verlaufenden Linie. Sie kann im Querschnitt z.B. halbkreisförmig oder dreieckförmig oder dergl. ausgebildet sein. Eine Seitenjustierung erfolgt dann derart, daß diese Befestigungsschrauben gleichzeitig als Justierschrauben dienen, indem die Befestigungsschrauben mehr oder weniger stark angezogen werden, je nachdem, zu welcher Seite der Kopfträger justiert werden soll.

In Ausgestaltung der Erfindung kann eine Seitenjustierung dadurch verbessert werden, daß die Befestigungsschrauben mit zwischen den Befestigungsflächen angeordneten Druckfedern versehen sind.

In weiterer Ausgestaltung der Erfindung kann eine einfache Höhenjustierung dadurch vorgenommen werden, daß jeder Kopfträger eine mittig zwischen den Befestigungsbohrungen verlaufende konische Bohrung zur Aufnahme einer konisch ausgebildeten Höhenjustierschraube aufweist und daß der Kopfträger im Bereich der konisch ausgebildeten Bohrung und Justierschraube elastisch ausgebildet ist.

Durch Betätigung dieser Höhenjustierschraube wird dabei eine den Magnetkopf tragende Wand des Kopfträgers verstellt, so daß der auf dem Kopfträger befestigte Magnetkopf mehr oder weniger in der Höhe verstellt werden kann.

Eine besonders einfache und zweckmäßige Bauweise eines Kopfträgers ergibt sich dadurch, daß der jeweils einteilig ausgebildete Kopfträger durch eine bis auf eine Bodenwand eingezogene Nut in ein starres Trägerteil und ein radial außenliegendes elastisches Trägerteil unterteilt ist, an dessen Oberseite jeweils ein Magnetkopf befestigt ist. Damit ist eine zuverlässige Befestigung über das starre Trägerteil einerseits und eine vorteilhafte und einfache Möglichkeit zur Höhenjustierung durch das elastische Trägerteil gegeben.

In weiterer Ausgestaltung der Erfindung ist vorgesehen, daß jeder Kopfträger ein Stecker- oder Buchsenteil und das Kopfrad entsprechend ausgebildete Buchsen- oder Steckerteile aufweist zur Herstellung der elektrischen Verbindung nach einer Montage der Kopfträger. Die Stecker- bzw. Buchsenverbindungen ermöglichen damit eine einfache elektrische Kontaktierung bei der Montage.

Eine weitere zweckmäßige Ausgestaltung besteht in einer im Querschnitt ovalen Form der Kopfträger, wobei das starre Trägerteil jeweils das elektrische Verbindungsteil und das elastische Trägerteil jeweils den vorzugsweise aufgeklebten Magnetkopf aufweist.

In der Zeichnung ist in den Fig. 1 bis 6 ein Ausführungsbeispiel des Gegenstandes gemäß der Erfindung schematisch dargestellt.
Fig. 1 zeigt eine Seitenansicht eines Scanners,
Fig. 2 zeigt einen vergrößerten Teilausschnitt dieses Scanners im Bereich des Kopfrades,
Fig. 3 zeigt einen Kopfträger in perspektischer Darstellung,
Fig. 4 zeigt den Kopfträger aus Richtung A nach Fig. 3 mit einem Teil des Kopfrades,
Fig. 5 zeigt eine schematische Draufsicht gemäß Fig. 3 ohne Darstellung des Magnetkopfes und des elektrischen Verbindungsteiles, und
Fig. 6 zeigt eine schematische Teildarstellung eines Kopfrades mit einem fertig montierten Kopfträger nach Fig. 3.

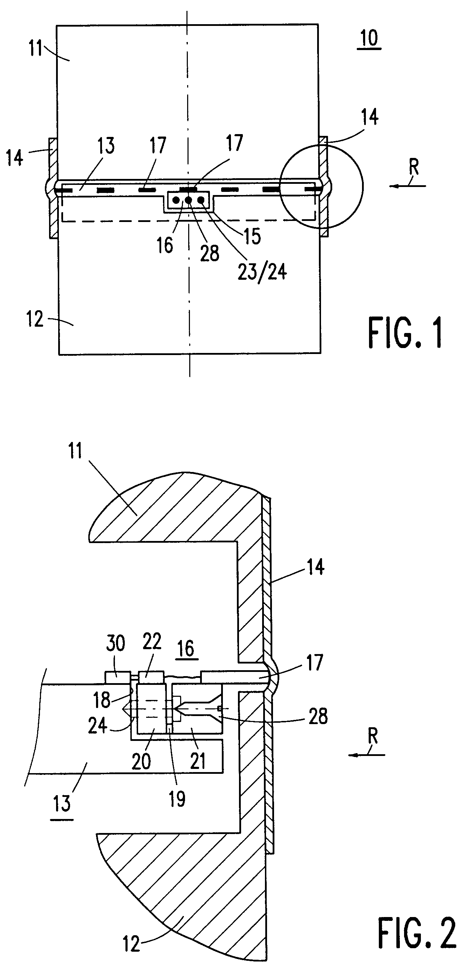

Fig. 1 und 2 zeigen einen Scanner 10 mit einer Obertrommel 11, einer Untertrommel 12 und einem Kopfrad 13, welches drehbar zwischen der Ober- und Untertrommel 11, 12 angeordnet ist. Mit 14 ist nicht maßstabsgerecht ein Magnetband bezeichnet, welches den Scanner 10 in seinem größten Teil umschlingt. In einem nicht vom Magnetband 14 umschlungenen Teil des Scanners ist eine in der Untertrommel 12 angeordnete Montageöffnung 15 angeordnet, die zur Montage bzw. Demontage und zur Justierung von Kopfträgern 16 dient, die an ihrer Oberseite mit Magnetköpfen 17 versehen sind und in Aussparungen 18 des Kopfrades 13 befestigt sind.

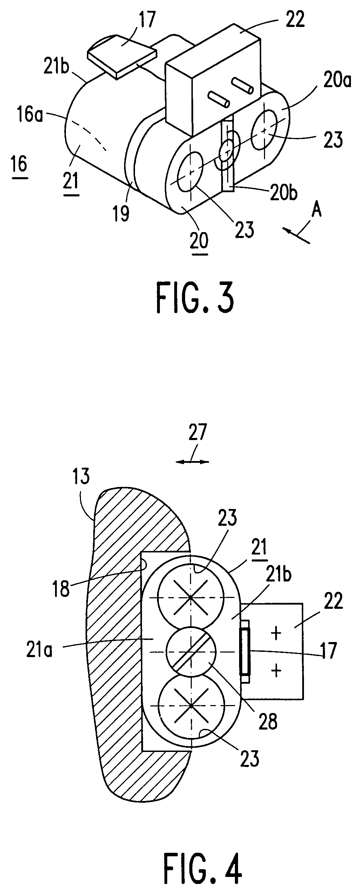

Ein in Fig. 3 bis 5 näher dargestellter Kopfträger 16 hat eine im Querschnitt ovale Form und ist durch eine bis auf seine Bodenwand 16a eingezogene Nut 19 in ein starres Trägerteil 20 und ein elastisches Trägerteil 21 unterteilt. Durch die Nut 19 sind die Oberwand und die beiden Seitenwände des Kopfträgers 16 durchtrennt, so daß beide Trägerteile 20, 21 nur noch durch die gemeinsame Bodenwand 16a miteinander verbunden sind. Das starre Trägerteil 20 trägt ein elektrisches Kontaktteil 22, und das elastische Trägerteil 21 trägt einen Magnetkopf 17. Der Kopfträger 16 besitzt zwei radiale Bohrungen 23 zur Aufnahme von Befestigungsschrauben 24 zwecks Befestigung in der Aussparung 18 des Kopfrades 13. An der rückseitigen Stirnfläche 20a des Trägerteiles 20 ist ein im Querschnitt dreieckförmiger, senkrecht verlaufender Steg 20b vorgesehen, der zur Seitenjustierung des Kopfträgers 16 dient. Mit 25 sind Druckfedern bezeichnet, die gegebenenfalls zur besseren und einfacheren Justierung dienen, wenn die Schrauben 24 mehr oder weniger eingedreht werden, so daß bei der Justierung der Kopfträger 16 mehr oder weniger entweder in Richtung 26a oder 26b verstellt werden kann.

Eine Höhenjustierung in Richtung 27 erfolgt mittels einer Justierschraube 28, die in eine zwischen den Bohrungen 23 angebrachte Justierbohrung 29 eingeschraubt werden kann. Die Elastizität des radial außenliegenden Trägerteiles 21 ergibt sich durch die Nut 19 und die Bohrungen 23, 29. Die Bohrung 29 ist im oberen Teil 29a konisch ausgebildet, so daß die ebenfalls konisch ausgebildete Schraube 28 beim Eindrehen die elastischen Wände 21a, b des elastischen Trägerteiles 21 auseinanderdrückt. Da jedoch die untere Wand 21a auf der Auflagefläche der Aussparung 18 des Kopfrades 13 aufliegt (siehe Fig. 4), wird nur die obere Wand 21b in Richtung 27 ausgelenkt, so daß damit der auf dieser Wand befestigte Magnetkopf 17 in Richtung 27 verstellt werden kann.

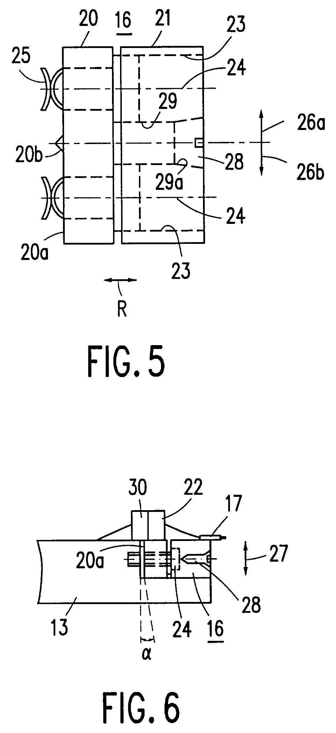

Fig. 6 zeigt einen montierten Kopfträger 16 mit einer elektrischen Kontakteinheit 22, die mit einer Kontakteinheit 30 des Kopfrades 13 elektrisch kontaktiert. In Ausgestaltung der Erfindung könnte die rückseitige Stirnfläche 20a des Trägerteiles 20 angeschrägt sein, wie dies durch den Winkel α angedeutet ist. Dadurch kann erreicht werden, daß beim Anziehen der Befestigungsschrauben 24 der Kopfträger 16 mit seiner Bodenwand 16a bzw. mit der unteren Wand 21a unter Vorspannung fest gegen die Auflagefläche der Aussparung 18 gedrückt wird.

## Patentansprüche

1. Abtasteinrichtung für ein Magnetbandgerät mit einem zwischen einer Ober- und Untertrommel (11, 12) eines Scanners (10) drehbar angeordneten Kopfrad (13) und mit Magnetköpfe (17) aufweisenden Kopfträgern (16), die am Umfang des Kopfrades (13) befestigt sind, dadurch gekennzeichnet, daß die Kopfträger (16) von außen in radialer Richtung (R) an das Kopfrad (13) anbaubar und justierbar ausgebildet sind.

2. Einrichtung nach Anspruch 1, dadurch gekennzeichnet, daß das Kopfrad (13) an seinem Außenumfang mit nach radial außen gerichteten Aussparungen (18) zur Aufnahme der Kopfträger (16) versehen ist und daß der Scanner (10) im Bereich des Kopfrades (13) an einer nicht vom Magnetband (14) umschlungenen Stelle eine Montageöffnung (15) aufweist.

3. Einrichtung nach Anspruch 1, dadurch gekennzeichnet, daß die Montageöffnung (15) in der Unter- und/oder Obertrommel (11, 12) ausgebildet ist.

4. Einrichtung nach einem der Ansprüche 1 bis 3, dadurch gekennzeichnet, daß die Kopfträger (16) jeweils mindestens eine radiale Bohrung (23) zur Aufnahme einer Befestigungsschraube (24) aufweisen.

5. Einrichtung nach einem der Ansprüche 1 bis 4, gekennzeichnet durch Mittel (23, 24, 20b; 28, 29) zur Seiten- und Höhenjustierung.

6. Einrichtung nach einem der Ansprüche 1 bis 5, dadurch gekennzeichnet, daß jeder Kopfträger (16) zwei radiale Bohrungen (23) zur Aufnahme von Befestigungs- bzw. Seitenjustierschrauben (24) aufweist und an seiner stirnseitigen Befestigungsfläche (20a) mit einer senkrecht zwischen den Bohrungen (23) verlaufenden stegartigen Erhöhung (20b) versehen ist.

7. Einrichtung nach Anspruch 6, dadurch gekennzeichnet, daß die Befestigungsschrauben (24) mit zwischen den Befestigungsflächen angeordneten Druckfedern (25) versehen sind.

8. Einrichtung nach einem der Ansprüche 1 bis 7, dadurch gekennzeichnet, daß jeder Kopfträger (16) eine mittig zwischen den Befestigungsbohrungen (23) verlaufende konische Bohrung (29) zur Aufnahme einer konische ausgebildeten Höhenjustierschraube (28) aufweist und daß der Kopfträger (16) im Bereich der konisch ausgebildeten Bohrung (29) und Schraube (28) elastisch ausgebildet ist.

9. Einrichtung nach einem der Ansprüche 1 bis 8, dadurch gekennzeichnet, daß der jeweils einteilig ausgebildete Kopfträger (16) durch eine bis auf eine Bodenwand (16a) eingezogene Nut (19) in ein starres Trägerteil (20) und in ein radial außen liegendes elastisches Trägerteil (21) unterteilt ist, an dessen Oberseite jeweils ein Magnetkopf (17) befestigt ist.

10. Einrichtung nach einem der Ansrpüche 1 bis 9, dadurch gekennzeichneet, daß der Kopfträger (16) jeweils eine im Querschnitt ovale Form aufweist, wobei das starre Trägerteil (20) jeweils das elektrische Verbindungsteil (22) und das elastische Trägerteil (21) jeweils den vorzugsweise aufgeklebten Magnetkopf (17) trägt.

11. Einrichtung nach einem der Ansprüche 1 bis 10, dadurch gekennzeichnet, daß jeder Kopfträger (16) ein Stecker- oder Buchsenteil (22) und das Kopfrad (13) entsprechend ausgebildete Buchsen- oder Steckerteile (30) aufweist zur Herstellung der elektrischen Verbindung nach Montage der Kopfträger (16).

12. Einrichtung nach einem der Ansprüche 1 bis 11, dadurch gekennzeichnet, daß die Stirnfläche (20a) des starren Trägerteiles (20) und/oder die entsprechende Montagefläche des Kopfrades (13) angeschrägt sind (ist).
